Europäisches Patentamt

(19) **European Patent Office**

**Office européen des brevets**

(11) Publication number: **0 271 333**
**B1**

(12) **EUROPEAN PATENT SPECIFICATION**

(45) Date of publication of the patent specification:
25.07.90

(51) Int. Cl.⁵: **B29C 53/04,** H05B 3/00

(21) Application number: **87310835.1**

(22) Date of filing: **09.12.87**

(54) Heating apparatus.

(30) Priority: **09.12.86 GB 8629445**

(43) Date of publication of application:
**15.06.88 Bulletin 88/24**

(45) Publication of the grant of the patent:
**25.07.90 Bulletin 90/30**

(84) Designated Contracting States:
**BE DE ES FR IT NL SE**

(56) References cited:
AT-A- 362 930
DD-A- 51 421
DE-B- 1 038 749
DE-B- 1 218 139
FR-A- 2 282 982
FR-A- 2 426 555
US-A- 3 980 251

PLASTVERARBEITER, vol. 30, no. 1, January 1979,
pages 11-14, Speyer, DE; G. Mager:
"Variationsmöglichkeiten beim Abkanten und örtlichen
Biegen von thermoplastischem Plattenmaterial"

(73) Proprietor: **C.R. Clarke & Company (UK) Limited,**
**Unit 3 Betws Industrial Park Foundry Road, Ammanford**
**Dyfed SA18 2LS(GB)**

(72) Inventor: **Clarke, Christopher R.§Fforestfach Farm,**
**Tycroes Road Tycroes, Ammanford Dyfed**
**SA18 3NS(GB)**

(74) Representative: **Austin, Hedley William et al,**
**Urquhart-Dykes & Lord Alexandra House 1 Alexandra**
**Road, Swansea West Glamorgan SA1 5ED(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention is concerned with heating apparatus and, in particular, such apparatus incorporating elongate linear radiant heating elements.

It is often desired to locally heat thermoplastic sheet in a straight line, in order to produce a line of thermally softened material which can be used as a bend line. One way of achieving such a linear heating effect is by the use of bare wire radiant elements (typically of electrically energised nickel-chromium resistance wire) disposed in closed proximity to the thermoplastic sheet, which is typically supported above the heating element(s).

There is a wide range of thermoplastic sheet materials which can be locally heated and subsequently bent using such heating elements; included in such materials are cast acrylics, extruded acrylics, polystyrene, PVC, expanded PVC, ABS, polypropylene and polycarbonates. Sheets of these thermoplastic materials are generally in the thickness range 1 to 20mm, but as the thickness increases, a wider band of material must be heated to ensure a satisfactory bend line.

As a general rule, a heated band of width about 1.5 times the thickness of the sheet is required in order to ensure a neat 90° bend without blemishes, whereas for a 180° bend, the heated band should preferably have a width of about three times the thickness of the sheet.

A non-contact heating apparatus comprising a plurality of elongate linear electrical heating elements in the form of straight resistive conductors arranged to be substantially parallel to, and equally spaced from, the surface of a thermoplastic sheet is known, for example, from Plastverarbeiter 30 No.1 (1979), FR-A 2 282 982 (upon which the preamble of claim 1 is based) and AT-A 363 930. These documents disclose apparatus of this type having means for variably adjusting the width of the heating zone, by controlling the width of a slot in a heat-resisting material in which the heating element is located, or by controlling the electrical power supply to the heating elements. Both of these methods involve considerable wastage of electrical energy when a wide band is heated. Uniform heating within close tolerances over a large width of heating band is also difficult to achieve with non-contact heating apparatus.

Accordingly, when it is desired to heat a wide band of thermoplastic sheet material, heating tapes or other contact heaters are often used. Unfortunately, such contact heaters are unsuitable for some plastics (such as polystyrene) because they tend to adhere to, and make marks at, the line of contact. Other plastics, such as polycarbonates, require very uniform heating, within close tolerances, which is difficult to achieve with such contact heaters.

It is also known, for example, from DE-B 1 038 749 to adjust the spacing between heating elements in a non-contact heating apparatus of the type referred to above. Such an arrangement does not permit the simultaneous control of the spacing between, and the electrical supply to, the heating elements.

We have now devised improved apparatus for non-contact radiant heating of thermoplastic sheet material, which enables some of the disadvantages of prior art apparatus to be alleviated.

The apparatus according to the invention comprises a plurality of elongate linear electrical heating elements arranged substantially parallel to, and equally spaced from, the surface of a thermoplastic sheet supported across a gap between a pair of sheet locating members. Each of the heating elements is mounted between longitudinally separated rotatable rollers having means for adjustment of the spacing between longitudinally separated rotatable rollers having means for adjustment of the spacing between the elements in a common plane as a result of rotation of the rollers, and at least the outer surface of each of the rollers is electrically conductive and arranged to be connected to an electrical power supply. The rollers are typically of brass or similar conductive metal.

The adjustment of the separation between the heating elements facilitate uniform heating over a large width of heated band within close tolerances.

The sheet locating members are typically a pair of supports for the sheet, with a longitudinally extending gap therebetween in which the heating elements are disposed.

The means for adjustment of the separation between the heating elements are typically part-helical grooves around the outer periphery of the respective roller, each such groove being arranged to receive one such heating element.

The electrical heating elements are preferably bare wire resistive conductors of, for example nickel-chrome wire, each mounted in tension to span two of the above-mentioned rollers. At least two such elements are arranged to face at least one surface the sheet to be heated; typically three such elements are employed to face both surfaces of the thermoplastic sheet (that is, a total of six heating elements).

Preferred embodiments of the present invention will now be described with reference to the accompanying drawings, in which:

Figure 1 shows schematically, the general construction of an exemplary arrangement of apparatus according to the invention;

Figure 2 shows in more detail an end assembly for use in apparatus such as that shown in Figure 1;

Figure 3 shows in more detail the roller employed in the end assembly of Figure 1; and

Figures 4a to 4d show various heating patterns achievable using apparatus according to the invention.

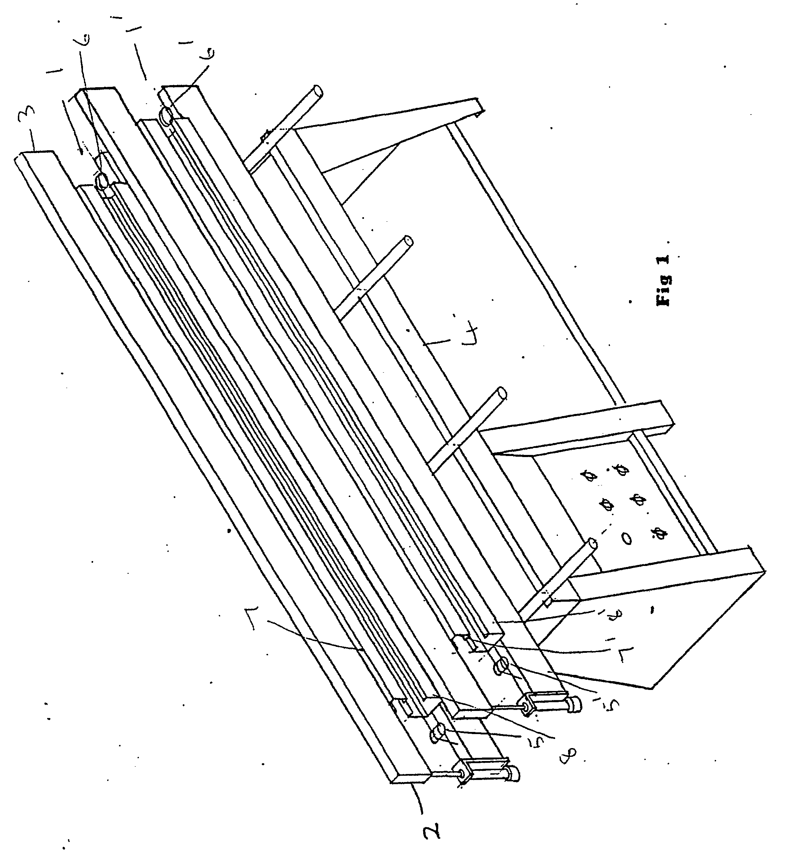

Referring to Figure 1, there are shown two arrays 1, 1' of straight bare wire resistive heating elements extending between opposed ends 2, 3 of a worktable 4. The ends of each heating element pass over respective rollers 5, 6 and 5', 6', which both support and position the elements below respective pairs of sheet supports 7, 8 and 7', 8' supported on a worktable.

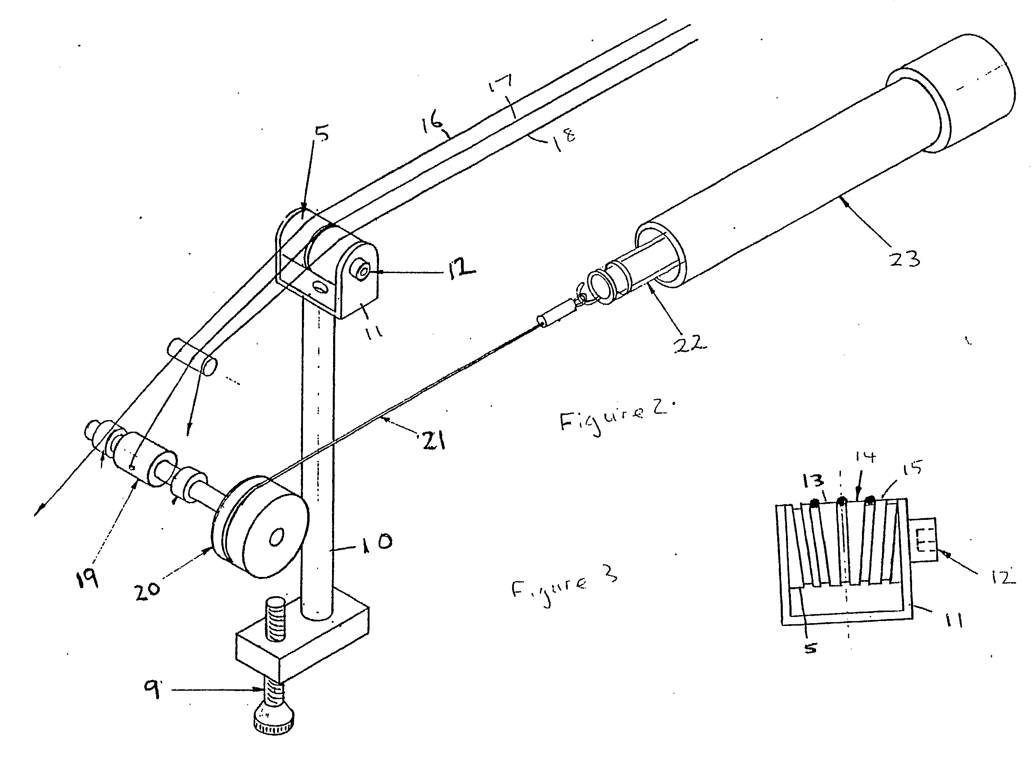

Referring to Figure 2, the roller 5 is adjustable for height using a screw adjuster 9 acting on an upstanding post 10, at the top end of which is a bracket 11 receiving the roller 5. The latter roller is rotatable, for example, by means of a hexagon key to be placed in socket 12.

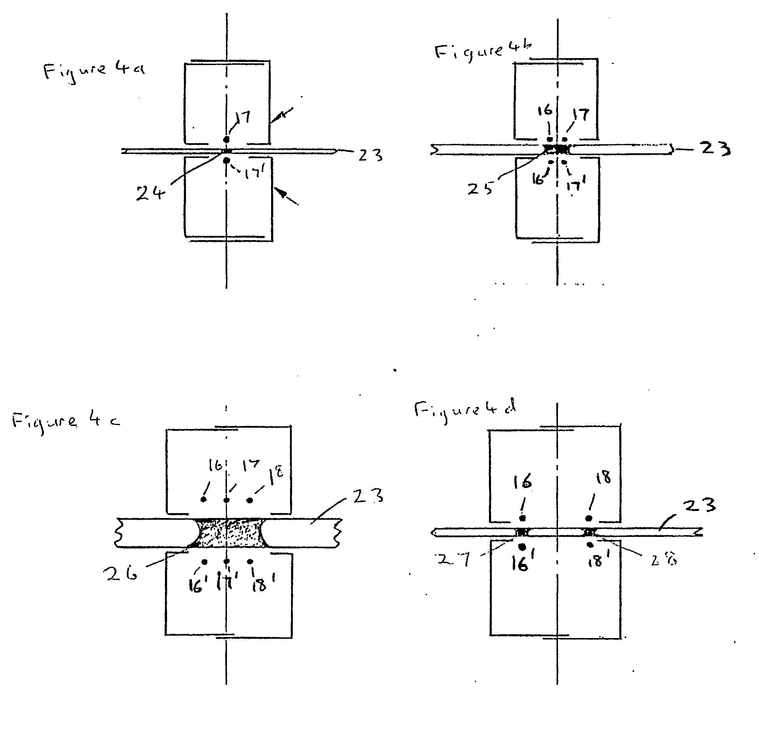

Referring to Figure 3, the roller 5 has a series of part-helical grooves 13, 14, 15 each capable of receiving a respective heating element 16, 17, 18 (Figure 2). As will be seen, rotation of the roller 5 in one sense will cause a heating element present in either of the outer grooves 13, 15 to diverge from a heating element present in the central groove 14; roation in the opposite sense causes the outer elements to move closer to the central element.

Reverting to Figure 2, heating elements 16, 17, 18 are connected to tensioning roller 19 which is coaxial with a tensioning pulley 20 connected via tension wire 21 to tension spring 22 which is substantially within shroud 23. The tension wire is wound around the pulley by an amount necessary to provide the required tension. An indicating marker (not shown) may be provided on the tension spring 22 to provide an indication of the required cold tension (that is, before energising the electrical connection). The spring 22 is arranged to compensate for expansion of the heating element as the latter reaches its operating temperature.

The electrical power supply is preferably no more than 50V for safety reasons.

Referring now to Figures 4a to 4d, there are shown various heating patterns achievable using apparatus according to the invention with heating elements located above and below the sheet 23 being heated.

Specifically, Figure 4a shows the use of a pair of heating elements 17, 17' above and below the sheet 23 (such elements being as used in the central groove 14 as described above, with the outer elements 16, 18 removed). By this means a single bend line 24 can be achieved. Figure 4b is similar and shows the use of two pairs of heating elements 16, 17, 16', 17' whereby a wider heating band 25 can be achieved. Figure 4c is again similar and shows the use of three pairs of heating elements 16, 17, 18, 16', 17', 18' whereby an even wider heating band 26 can be achieved. Figure 4d shows the use of the two outer pairs of heating elements 16, 17, 16', 18', only so as to achieve two separate heated lines 27, 28.

## Claims

1. Non-contact heating apparatus comprising a plurality of elongate linear electrical heating elements (16, 17, 18) arranged to be substantially parallel to, and equally spaced from, the surface of a thermoplastic sheet (23) supported across a gap between a pair of sheet locating members (7, 8, 7', 8'), characterised in that each of said elements (10, 17, 18) is mounted between longitudinally separated rotatable rollers (5, 6, 5', 6') having means for adjustment of the spacing between said elements (16, 17, 18) in a common plane which is substantially parallel to said surface, said adjustment being effected as a result of rotation of said rollers (5, 6, 5', 6'), at least the outer surface of each of said rollers being electrically conductive to be connected to an electrical power supply.

2. Apparatus according to claim 1, in which said sheet locating members (7, 8, 7', 8') comprise a pair of supports for said thermoplastic sheet (23), with a longitudinally extending gap between said supports in which the heating elements (16, 17, 18) are disposed.

3. Apparatus according to claim 1 or 2, in which said means for adjustment of the separation between the heating elements comprise part-helical grooves (13, 14, 15) around the outer periphery of the respective roller, each groove being arranged to receive one of said heating elements (16, 17, 18).

4. Heating apparatus according to any of claims 1 to 3, in which said electrical heating elements (16, 17, 18) are bare wire conductors, mounted in tension.

5. Heating apparatus according to any of claims 1 to 4, in which at least six of said elements (16, 17, 18) are employed so arranged that at least three face each surface of the thermoplastic sheet (23).

## Patentansprüche

.1. Berührungsfreies Heizgerät mit mehreren langgestreckten, geradlinigen elektrischen Heizelementen (16, 17, 18), die im wesentlichen parallel und im gleichen Abstand zur Oberfläche eines Blattes (23) aus thermoplastischem Material angeordnet sind, welches über einem Spalt zwischen das Blatt lokalisierenden Elementen (7, 8, 7', 8') gelagert ist, dadurch gekennzeichnet, daß jedes Element (16, 17, 18) zwischen in deren Längsrichtung einen Abstand voneinander aufweisenden drehbaren Rollen (5, 6, 5', 6') montiert ist, die Mittel zur Einstellung des Abstandes zwischen den Elementen (16, 17, 18) in einer gemeinsamen, im wesentlichen parallel zu der genannte Oberfläche liegenden Ebene aufweisen, wobei diese Einstellung durch Drehen der Rollen (5, 6, 5', 6') erfolgt und wenigstens die äußere Oberfläche jeder der Rollen elektrisch leitend und an eine elektrische Stromquelle anschließbar ist.

2. Heizgerät nach Anspruch 1, bei dem die das Blatt lokalisierenden Elemente (7, 8, 7', 8') aus zwei Lagern (7, 8, 7', 8') für das Blatt (23) aus thermoplastischem Material bestehen, zwischen denen ein Längsspalt ausgebildet ist, in dem die Heizelemente (16, 17, 18) angeordnet sind.

3. Heizgerät nach Anspruch 1 oder 2, bei dem die Mittel zur Einstellung des Abstandes zwischen den Heizelementen aus in der Peripherie der entsprechenden Rollen vorgesehenen, teilweise wendelförmigen Nuten (13, 14, 15) bestehen, wobei jede Nut eines der Heizelemente (16, 17, 18) aufnimmt.

4. Heizgerät nach einem der Ansprüche 1 bis 3, bei dem die elektrischen Heizelemente (16, 17, 18) unter Zug montierte Blankdrahtleiter sind.

5. Heizgerät nach einem der Ansprüche 1 bis 4, bei dem mindestens sechs Elemente (16, 17, 18) derart angeordnet sind, daß jeder Oberfläche des Blattes (23) aus thermoplastischem Material mindestens drei Heizelemente gegenüberliegen.

**Revendications**

1. Appareil de chauffage sans contact comprenant une pluralité d'éléments chauffants électriques linéaires de forme allongée (16, 17, 18), disposés de façon à être sensiblement parallèles à la surface d'un feuille thermoplastique (23) et à une même distance de celle-ci et qui sont supportés dans un espace compris entre deux éléments de positionnement de feuille (7, 8, 7′, 8′), caractérisé par le fait que chacun desdits éléments (16, 17, 18) est monté entre des rouleaux (5, 6, 5′, 6′) tournants séparés dans le sens longitudinal et comportant des moyens de réglage de l'écartement entre lesdits éléments (16, 17, 18) dans un plan commun sensiblement parallèle à ladite surface, ledit réglage étant obtenu par la rotation desdites rouleaux (5, 6, 5′, 6′), dont au moins la surface extérieure de chacun d'eux est conductrice électriquement et propre à être raccordée à une alimentation de puissance électrique.

2. Appareil selon la revendication 1, caractérisé par le fait que lesdits éléments de positionnement (7, 8, 7′, 8′) de la feuille comprennent deux supports de ladite feuille thermoplastique (23) comportant entre eux un espace longitudinal dans lequel sont disposés les éléments chauffants (16, 17, 18).

3. Appareil selon l'une des revendications 1 ou 2, caractérisé par le fait que lesdits moyens de réglage de l'écartement entre les éléments chauffants comprennent des rainures (13, 14, 15) partiellement hélicoïdales ménagées sur la périphérie extérieure du rouleau correspondant, chaque rainure étant disposée pour recevoir l'un desdits éléments chauffants (16, 17, 18).

4. Appareil de chauffage selon l'une quelconque des revendications 1 à 3, caractérisé par le fait que lesdits éléments chauffants électriques (16, 17, 18), sont des fils nus placés sous tension.

5. Appareil de chauffage selon l'une quelconque des revendications 1 à 4, caractérisé par le fait qu'au moins six desdits éléments (16, 17, 18) sont utilisés en étant disposés de telle sorte que trois d'entre eux au moins soient en vis-à-vis de chaque face de la feuille thermoplastique (23).

Fig 1

Figure 2

Figure 3

EP 0 271 333 B1

Figure 4a

Figure 4b

Figure 4c

Figure 4d

EP 0 271 333 B1